# EUROPEAN PATENT SPECIFICATION

(11) **EP 4 209 688 B1**
(45) Date of publication and mention of the grant of the patent: **12.11.2025**
(21) Application number: 21957716.0
(22) Date of filing: 28.09.2021
(51) Int. Cl.: F16B 37/04, F16B 37/00

(54) **FLOATING NUT ASSEMBLY AND ELECTRICAL DEVICE**
SCHWIMMENDE MUTTERANORDNUNG UND ELEKTRISCHE VORRICHTUNG
ENSEMBLE ÉCROU FLOTTANT ET DISPOSITIF ÉLECTRIQUE

(43) Date of publication of application: 12.07.2023
(73) Proprietor: Contemporary Amperex Technology (Hong Kong) Limited, Central, Central And Western District (HK)
(72) Inventor: YOU, Shubing, Fujian 352000 (CN); ZHANG, Wenhui, Fujian 352000 (CN)
(74) Representative: Holt, Lucy Rose
(86) International application number: PCT/CN2021/121475
(87) International publication number: WO 2023/050099

(56) References cited:
- CN-A- 107 504 024
- CN-A- 112 392 833
- CN-U- 204 003 902
- CN-U- 209 025 978
- DE-U1- 202017 100 515
- JP-A- 2013 113 391
- JP-A- 2017 180 492
- JP-U- S60 110 707
- US-A1- 2005 042 057
- US-A1- 2020 003 248
- US-B2- 6 637 993

## Description

### TECHNICAL FIELD

This application relates to the field of battery assembly technologies, and in particular, to a floating nut assembly and an electric device.

### BACKGROUND

Floating nut assemblies have been widely used in the mechanical industry, such as automobiles. For example, floating nut assemblies may be used to fasten vehicle parts to vehicle bodies.

However, in the prior art, assembly efficiency and accuracy of floating nut assemblies and bolts are low during assembly.

US2005042057A1 relates generally to a connecting nut for screwing constructional elements to a plate-like component.

### SUMMARY

This application is intended to provide a floating nut assembly and an electric device. The floating nut assembly can ensure assembly efficiency and connection accuracy of a nut and a bolt.

This application is implemented by the following technical solutions.

Aspects of the invention are set out in the claims. According to a first aspect, this application provides a floating nut assembly, with the technical features of claim 1.

In the floating nut assembly according to embodiments of this application, the limiting space formed between the limiting bracket and the base is used to accommodate the nut, so as to restrict the nut in the limiting space. The protrusion is in clearance fit and/or elastic fit with the positioning hole, allowing the nut to float relative to the limiting bracket. When the nut moves relative to the limiting bracket in a plane perpendicular to an axial direction of the threaded hole, the protrusion fits with the positioning hole, so that a floating space of the nut is small, that is, movement of the nut is small during assembly of the nut and the bolt, thereby ensuring assembly efficiency and connection accuracy of the nut and the bolt. In addition, at least two protrusions correspond to at least two positioning holes, which can prevent the nut from rotating relative to the limiting bracket, further ensuring assembly efficiency and connection accuracy of the nut and the bolt.

According to some embodiments of this application, the protrusion is in elastic fit with the positioning hole, and the protrusion is configured to be elastically deformable in a radial direction thereof.

In the foregoing solution, through elastic deformation of the protrusion in its radial direction, the nut can move relative to the limiting bracket, thereby implementing floating of the nut.

According to some embodiments of this application, the at least two protrusions are spaced apart around an axis of the nut.

In the foregoing solution, the protrusions are in one-to-one correspondence to the positioning holes, at least two protrusions are spaced apart around the axis of the nut, and correspondingly, at least two positioning holes are spaced apart around the axis of the nut, so that the nut fits with the limiting bracket stably. This ensures that the nut is able to move relative to the limiting bracket in any direction in a plane perpendicular to the axis of the nut, thereby meeting a requirement for floating of the nut.

According to some embodiments of this application, a portion of the protrusion in contact with the positioning hole is made of an elastic material.

In the foregoing solution, the portion of the protrusion in contact with the positioning hole is made of the elastic material, so that the portion of the protrusion in contact with the positioning hole is elastically deformable to allow the nut to move relative to the limiting bracket, thereby implementing floating of the nut.

According to some embodiments of this application, the protrusion is in clearance fit with the positioning hole. The protrusion runs through the positioning hole. An end portion of the protrusion is provided with an elastic stopper, where the elastic stopper is configured to prevent the protrusion from falling off the positioning hole along an axial direction of the positioning hole.

In the foregoing solution, the protrusion is in clearance fit with the positioning hole to meet a requirement for floating of the nut. The end portion of the protrusion is provided with the elastic stopper. After the protrusion fits with the positioning hole, the elastic stopper can prevent the protrusion from falling off the positioning hole along the axial direction of the positioning hole, which ensures that the limiting bracket is combined with the nut during a moving process of the floating nut assembly, thereby avoiding loss of components.

According to some embodiments of this application, the elastic stopper fits around the protrusion, and an outer peripheral surface of the elastic stopper includes a first guide slope and a second guide slope. The first guide slope is disposed opposite the second guide slope along the axial direction of the positioning hole.

In the foregoing solution, guiding functions of the first guide slope and the second guide slope can help the elastic stopper enter the positioning hole from two ends along the axial direction of the positioning hole, improving assembly and maintenance efficiency and guaranteeing service life of the elastic stopper.

According to some embodiments of this application, the end portion of the protrusion and/or an end portion of the positioning hole is provided with a guide portion for guiding the protrusion to insert into the positioning hole.

In the foregoing solution, a guiding function of the guide portion helps the protrusion insert into the positioning hole, facilitating assembly of the limiting bracket and the nut.

According to the first aspect, the limiting bracket includes a bracket body and a connecting arm. The bracket body is configured to form the limiting space with the base, and the connecting arm is detachably connected to the base.

In the foregoing solution, the bracket body and the base form the limiting space to restrict the nut in the limiting space. The connecting arm is detachably connected to the base to facilitate assembly and replacement of the nut.

According to some embodiments of this application, one end of the connecting arm is connected to the bracket body, and in the plane perpendicular to the axial direction of the threaded hole, a projection of the connecting arm does not overlap a projection of the bracket body.

In the foregoing solution, in the plane perpendicular to the axial direction of the threaded hole, the projection of the connecting arm does not overlap the projection of the bracket body, so that the nut can be separated from the limiting bracket along the axial direction of the threaded hole, facilitating replacement of the nut.

According to the first aspect, the nut includes a nut body and a flange. The threaded hole is disposed in the nut body. The flange is formed on an outer peripheral surface of the nut body. The bracket body is provided with a through hole corresponding to the nut body. The bracket body fits around the nut body through the through hole. The flange is restricted in the limiting space. The protrusion is disposed on the bracket body. The positioning hole is disposed on the flange.

In the foregoing solution, the flange is restricted in the limiting space, and the flange can move in the limiting space along an axial direction of the nut. Because the bracket body fits around the nut body through the through hole, when the flange moves in the limiting space along the axial direction of the nut, the nut body moves in the through hole along the axial direction of the nut, and the bracket body and the base restrict the flange from leaving the limiting space along the axial direction of the nut. In combination with the protrusion fitting with the positioning hole, a requirement for assembling the nut and the limiting bracket is met.

According to some embodiments of this application, the connecting arm is provided in a quantity of at least two, and the at least two connecting arms are spaced apart around an axis of the through hole.

In the foregoing solution, the at least two connecting arms are spaced apart around the axis of the through hole, so that the limiting bracket and the base have at least two connection positions, ensuring connection stability of the limiting bracket and the base.

According to some embodiments of this application, a clearance portion for avoiding the connecting arm is formed on the flange.

In the foregoing solution, the clearance portion avoids the connecting arm, reduces an overall size of the floating nut assembly and installation space occupied, and can also prevent the nut from rotating relative to the limiting bracket.

According to some embodiments of this application, the nut body is in clearance fit with the through hole.

In the foregoing solution, the nut body is in clearance fit with the through hole, so that a clearance is present between the nut body and a hole wall of the through hole, allowing the nut to move relative to the limiting bracket in the plane perpendicular to the axial direction of the threaded hole.

According to a second aspect, this application further provides an electric device, according to the dependent claim 12. The electric device includes: a device body; a battery; the floating nut assembly according to the foregoing solution, where the limiting bracket is detachably connected to the device body; and a bolt, configured to be connected to the nut for fastening the battery to the device body.

In the electric device according to this embodiment of this application, the limiting bracket is detachably connected to the device body to restrict the nut in a limiting space formed between the limiting bracket and the device body, and the bolt is connected to the nut to fasten the battery to the device body, facilitating assembly and disassembly of the battery and the device body.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the examples of this application more clearly, the following briefly describes the accompanying drawings required for describing the examples of this application. Apparently, the accompanying drawings in the following descriptions show merely some examples of this application, and persons of ordinary skill in the art may still derive other drawings from the accompanying drawings without creative efforts.
FIG. 1 is an exploded view of a floating nut assembly according to some embodiments of this application;
FIG. 2 is a first cross-sectional view of a floating nut assembly according to some embodiments of this application;
FIG. 3 is a second cross-sectional view of a floating nut assembly according to some embodiments of this application;
FIG. 4 is a schematic structural diagram of a limiting bracket according to some embodiments of this application;
FIG. 5 is a schematic diagram showing a clearance fit between a protrusion and a positioning hole according to some embodiments of this application;
FIG. 6 is a schematic structural diagram of a limiting bracket according to some other embodiments of this application;
FIG. 7 is a schematic structural diagram of a nut according to some embodiments of this application;
FIG. 8 is a schematic diagram showing fitting between a limiting bracket and a nut according to some embodiments of this application;
FIG. 9 is an exploded view of some components of an electric device according to some embodiments of this application; and
FIG. 10 is a partial cross-sectional view of an electric device according to some embodiments of this application.

In the accompanying drawings, the figures are not drawn to scale.

Reference signs: 100. floating nut assembly; 10. nut; 11. threaded hole; 12. nut body; 13. flange; 131. clearance portion; 20. limiting bracket; 21. bracket body; 211. through hole; 22. connecting arm; 221. first segment; 222. second segment; 31. protrusion; 311. sub protrusion; 32. positioning hole; 33. elastic stopper; 331. first guide slope; 332. second guide slope; 40. screw; 500. base; 600. bolt; and 700. battery holder.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments, as long as these combinations fall within the wording of the appended claims.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, or may refer to a direct connection, an indirect connection via an intermediate medium, or an interaction between two elements. Persons of ordinary skill in the art can understand specific meanings of these terms in this application as appropriate to specific situations.

Floating nut assemblies have been widely used in the automobile industry. For example, floating nut assemblies may be used to fasten vehicle parts (for example, batteries) to vehicle bodies. An existing floating nut assembly includes a limiting box and a nut. The limiting box is restricted in a cavity inside the floating nut assembly, and the nut is restricted in the limiting box. The nut can move in the limiting box to implement floating of the nut. The inventors have noted that efficiency and accuracy of assembling the floating nut assembly with a bolt are low. The inventors have found through research that the reason for the low assembly efficiency and accuracy is that a movement space, or a floating space, of the nut in the limiting box is large. The movement space of the nut in the limiting box is large, such that when the bolt fits with the nut, the nut is easily displaced, which wastes assembly time and affects assembly accuracy.

In view of this, the inventors have designed a floating nut assembly through in-depth research. A limiting bracket is detachably connected to a base to form between the limiting bracket and the base a limiting space for accommodating the nut. The nut is restricted in the limiting space. One of the limiting bracket and the nut is provided with at least two protrusions, and the other one is provided with at least two positioning holes. The protrusions are in one-to-one correspondence to the positioning holes. The protrusion is inserted into the positioning hole. The protrusion is in clearance fit and/or elastic fit with the positioning hole.

In such floating nut assembly, after the limiting bracket is connected to the base, the nut is accommodated in the limiting space formed between the limiting bracket and the base to restrict the nut in the limiting space. In an embodiment where the protrusion is in clearance fit with the positioning hole, the nut can move relative to the limiting bracket in a plane perpendicular to an axial direction of a threaded hole, so as to implement floating of the nut. In an embodiment where the protrusion is in elastic fit with the positioning hole, the nut can move relative to the limiting bracket in the plane perpendicular to the axial direction of the threaded hole based on an elastic characteristic, so as to implement floating of the nut. In an embodiment where the protrusion is in clearance fit and elastic fit with the positioning hole, the nut can move in a wide range relative to the limiting bracket in the plane perpendicular to the axial direction of the threaded hole, so as to implement floating of the nut. When the nut moves relative to the limiting bracket in the plane perpendicular to the axial direction of the threaded hole, the fitting between the protrusion and the positioning hole allows for a small floating space for the nut, so that movement of the nut is small during assembly of the nut and the bolt, thereby ensuring assembly efficiency and connection accuracy of the nut and a bolt. In addition, at least two protrusions correspond to at least two positioning holes, which can prevent the nut from rotating relative to the limiting bracket, further ensuring assembly efficiency and connection accuracy of the nut and the bolt.

The electric device disclosed in the embodiments of this application may be, but is not limited to, a vehicle, a ship, an aircraft, or the like. For ease of description, the electric device of an embodiment of this application being a vehicle is used as an example for description of the following embodiments.

During assembly of a vehicle, a battery is installed at the bottom of a vehicle body, and the battery is fastened to a beam of the vehicle body through a floating nut assembly fitting with a bolt, so as to facilitate assembly and disassembly of the battery.

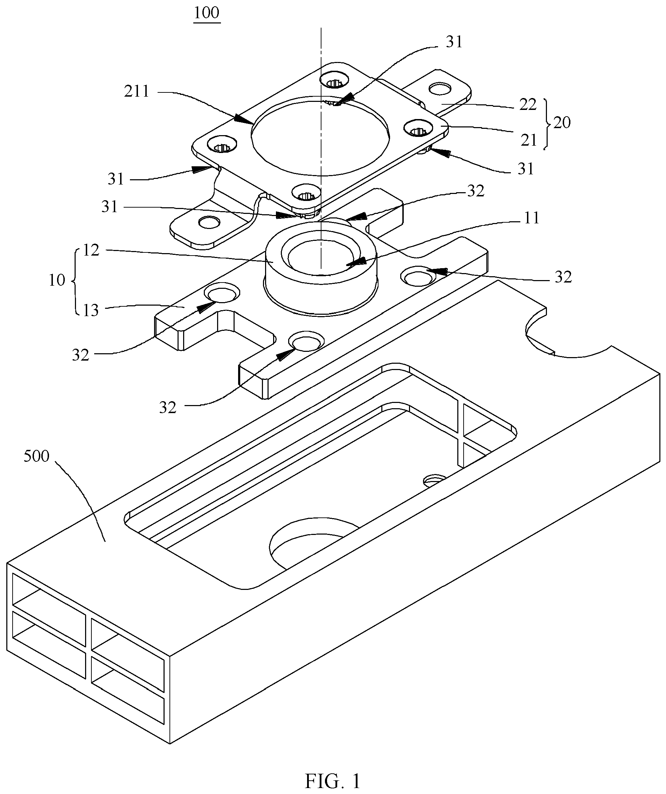

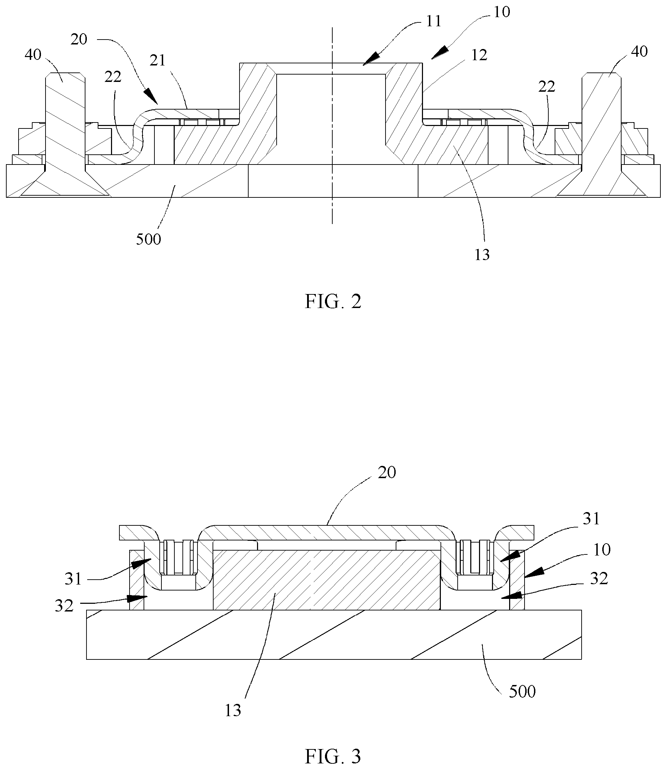

Referring to FIG. 1, FIG. 1 is an exploded view of a floating nut assembly 100 according to some embodiments of this application. FIG. 2 is a first cross-sectional view of a floating nut assembly 100 according to some embodiments of this application. FIG. 3 is a second cross-sectional view of a floating nut assembly 100 according to some embodiments of this application. According to some embodiments of this application, as shown in FIG. 1 to FIG. 3, this application provides a floating nut assembly 100. The floating nut assembly 100 includes a nut 10 and a limiting bracket 20. The nut 10 is provided with a threaded hole 11. The limiting bracket 20 is configured to be detachably connected to a base 500 to form between the limiting bracket 20 and the base 500 a limiting space for accommodating the nut 10. One of the limiting bracket 20 and the nut 10 is provided with at least two protrusions 31, and the other one is provided with at least two positioning holes 32. The protrusions 31 are in one-to-one correspondence to the positioning holes 32. The protrusion 31 is inserted into the positioning hole 32, and the protrusion 31 is in clearance fit and/or elastic fit with the positioning hole 32.

The base 500 is a foundation for mounting the floating nut assembly 100. The limiting bracket 20 is a component for restricting a position of the nut 10. When the floating nut assembly 100 is configured for assembly of vehicle parts, the base 500 may be a beam of a vehicle body. After the limiting bracket 20 is connected to the base 500, the nut 10 is accommodated in the limiting space, or the nut 10 is restricted in the limiting space. The nut 10 is a component used to be connected to a bolt to implement rapid assembly of two to-be-connected components.

Optionally, as shown in FIG. 2, the limiting bracket 20 may be connected to the base 500 by using a screw 40 to facilitate assembly and disassembly. In some embodiments, the limiting bracket 20 may be connected to the base 500 by clamping, plugging, or the like.

One of the limiting bracket 20 and the nut 10 is provided with at least two protrusions 31, and the other one is provided with at least two positioning holes 32. There may be two cases. For example, and according to the invention, the limiting bracket 20 is provided with at least two protrusions 31, and the nut 10 is provided with at least two positioning holes Alternatively, and not according to the invention, the limiting bracket 20 is provided with at least two positioning holes 32, and the nut 10 is provided with at least two protrusions 31.

In the figure, an extending direction of the protrusion 31 is parallel to an axial direction of the threaded hole 11.

The protrusions 31 are in one-to-one correspondence to the positioning holes 32. To be specific, each protrusion 31 is inserted into one positioning hole 32. The protrusion 31 is in clearance fit and/or elastic fit with the positioning hole 32. This may be in various manners. For example, the protrusion 31 is in clearance fit with the positioning hole 32, the protrusion 31 is in elastic fit with the positioning hole 32, or the protrusion 31 is in clearance fit and elastic fit with the positioning hole 32.

In an embodiment where the protrusion 31 is in clearance fit with the positioning hole 32, the nut 10 can move relative to the limiting bracket 20 in a plane perpendicular to the axial direction of the threaded hole 11, so as to implement floating of the nut 10. In an embodiment where the protrusion 31 is in elastic fit with the positioning hole 32, the nut 10 can move relative to the limiting bracket 20 in the plane perpendicular to the axial direction of the threaded hole 11 based on an elastic characteristic, so as to implement floating of the nut 10. In an embodiment where the protrusion 31 is in clearance fit and elastic fit with the positioning hole 32, the nut 10 can move in a wide range relative to the limiting bracket 20 in the plane perpendicular to the axial direction of the threaded hole 11, so as to implement floating of the nut 10.

In the floating nut assembly 100 according to this embodiment of this application, the limiting space formed between the limiting bracket 20 and the base 500 is used to accommodate the nut 10 to restrict the nut 10 in the limiting space. The protrusion 31 is in clearance fit and/or elastic fit with the positioning hole 32, allowing the nut 10 to float relative to the limiting bracket 20. When the nut 10 moves relative to the limiting bracket 20 in the plane perpendicular to the axial direction of the threaded hole 11, the fitting between the protrusion 31 and the positioning hole 32 allows for a small floating space for the nut 10, so that movement of the nut 10 is small during assembly of the nut 10 and the bolt, thereby ensuring assembly efficiency and connection accuracy of the nut 10 and the bolt. In addition, at least two protrusions 31 correspond to at least two positioning holes 32, which can prevent the nut 10 from rotating relative to the limiting bracket 20, further ensuring assembly efficiency and connection accuracy of the nut 10 and the bolt.

It should be noted that a cross section of the positioning hole 32 may be, but is not limited to, a round shape, or a regular shape such as a rectangular shape, as long as the nut 10 can move relative to the limiting bracket 20 in the plane perpendicular to the axial direction of the threaded hole 11 after the protrusion 31 fits with the positioning hole 32. Correspondingly, a cross section of the protrusion 31 may match a profile of the cross section of the positioning hole 32. To be specific, distances from any positions on an outer peripheral surface of the protrusion 31 to a hole wall of the positioning hole 32 are consistent.

For easy description, an example where the positioning hole 32 is round and the protrusion 31 is a columnar structure is used for description of the following embodiments. To ensure that ranges of movement of the nut 10 in all directions are consistent in the plane perpendicular to the axial direction of the threaded hole 11, an axis of the positioning hole 32 is collinear with an axis of the protrusion 31.

According to some embodiments of this application, optionally, the protrusion 31 is in elastic fit with the positioning hole 32, and the protrusion 31 is configured to be elastically deformable in a radial direction thereof.

The protrusion 31 may be a columnar structure, and the extending direction of the protrusion 31 is parallel to the axial direction of the threaded hole 11. The radial direction of the protrusion 31 means a direction passing through the axis of the protrusion 31 in a plane perpendicular to the extending direction of the protrusion 31 (that is, a plane perpendicular to the radial direction of the threaded hole 11). The radial direction of the protrusion 31 is perpendicular to the axial direction of the threaded hole 11.

As the protrusion 31 is in elastic fit with the positioning hole 32, this means means that at least one of the protrusion 31 and the hole wall of the positioning hole 32 is deformed after being subjected to a force, so as to allow the nut 10 to move relative to the limiting bracket 20 in a direction of the force. To be specific, the nut 10 moves relative to the limiting bracket 20 in the plane perpendicular to the axial direction of the threaded hole 11. As the protrusion 31 is in elastic fit with the positioning hole 32, it may be that the protrusion 31 is elastically deformable in the radial direction thereof, or may be that the hole wall of the positioning hole 32 is elastically deformable in a radial direction of the positioning hole 32, or may be that the protrusion 31 is elastically deformable in the radial direction of the protrusion 31 and the hole wall of the positioning hole 32 is elastically deformable in the radial direction of the positioning hole 32. In some embodiments, the protrusion 31 is configured to be elastically deformable in the radial direction thereof, so as to allow the nut 10 to move relative to the limiting bracket 20 in the plane perpendicular to the axial direction of the threaded hole 11.

The protrusion 31 is elastically deformable in the radial direction thereof, allowing the nut 10 to move relative to the limiting bracket 20, thereby implementing floating of the nut 10.

According to some embodiments of this application, optionally, at least two protrusions 31 are spaced apart around an axis of the nut 10.

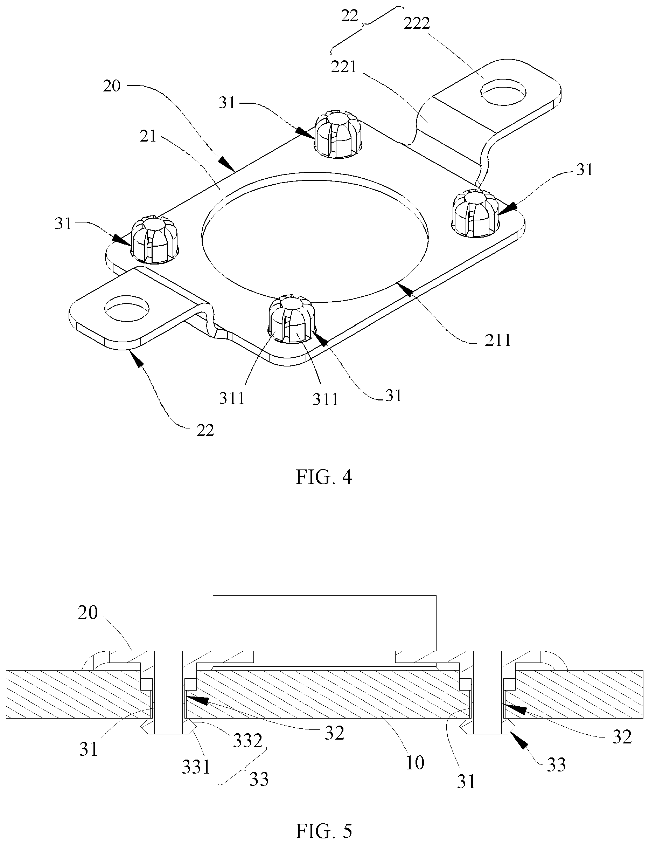

The axis of the nut 10 is an axis of the threaded hole 11. At least two protrusions 31 are spaced apart around the axis of the nut 10, meaning that all the protrusions 31 are disposed around the axis of the nut 10. The protrusions 31 are in one-to-one correspondence to the positioning holes 32. At least two protrusions 31 are spaced apart around the axis of the nut 10, and correspondingly, at least two positioning holes 32 are spaced apart around the axis of the nut 10. In other words, all the positioning holes 32 are disposed around the axis of the nut 10. For example, FIG. 4 is a schematic structural diagram (bottom view) of a limiting bracket 20 according to some embodiments of this application. In an embodiment where the positioning hole 32 is provided in the nut 10, as shown in FIG. 4, there are four positioning holes 32, and the four positioning holes 32 are spaced apart around the axis of the nut 10.

All the protrusions 31 are spaced apart around the axis of the nut 10, so that the nut 10 fits with the limiting bracket 20 stably. This ensures that the nut 10 can move relative to the limiting bracket 20 in any direction in a plane perpendicular to the axis of the nut 10, meeting a requirement for floating of the nut 10.

According to some embodiments of this application, optionally, a portion of the protrusion 31 in contact with the positioning hole 32 is made of an elastic material.

The protrusion 31 is inserted into the positioning hole 32. As the protrusion 31 is in contact with the positioning hole 32, this means that the outer peripheral surface of the protrusion 31 is in contact with the hole wall of the positioning hole 32. As the portion of the protrusion 31 in contact with the positioning hole 32 is made of an elastic material, this means that the outer peripheral surface of the protrusion 31 is made of the elastic material. To be specific, a surface of the protrusion 31 in contact with the hole wall of the positioning hole 32 is made of the elastic material. In a case that the outer peripheral surface of the protrusion 31 is made of the elastic material, when the protrusion 31 comes into contact with the positioning hole 32, the outer peripheral surface of the protrusion 31 can be elastically deformable in the radial direction of the protrusion 31 as the outer peripheral surface of the protrusion 31 abuts against the hole wall of the positioning hole 32, so that the nut 10 can move relative to the limiting bracket 20 in the plane perpendicular to the axial direction of the threaded hole 11.

When the protrusion 31 is a composite structure, the protrusion 31 includes a base body and an elastic material layer. The elastic material layer fits around an outer peripheral surface of the base body. The base body may be made of a rigid material. The elastic material layer is configured for contact with the hole wall of the positioning hole 32. When the protrusion 31 is an integral structure, the entire protrusion 31 may be made of an elastic material.

The portion of the protrusion 31 in contact with the positioning hole 32 is made of an elastic material, so that the portion of the protrusion 31 in contact with the positioning hole 32 is elastically deformable, allowing the nut 10 to move relative to the limiting bracket 20, thereby implementing floating of the nut 10.

According to some embodiments of this application, optionally, the hole wall of the positioning hole 32 is made of the elastic material. For example, the hole wall of the positioning hole 32 is provided with an elastic layer. When the protrusion 31 is in contact with the positioning hole 32 and exerts a force on the hole wall of the positioning hole 32, the elastic layer provided on the hole wall is stressed to deform, which allows the nut 10 to move a distance relative to the limiting bracket 20, thereby implementing floating of the nut 10.

According to some embodiments of this application, optionally, as shown in FIG. 4, the protrusion 31 may include a plurality of sub protrusions 311. The plurality of sub protrusions 311 are spaced apart around the axis of the protrusion 31.

Each sub protrusion 311 is disposed along the extending direction of the protrusion 31. One end of each sub protrusion 311 is a free end, making the sub protrusion 311 a cantilever structure. When the hole wall of the positioning hole 32 abuts against the sub protrusion 311, the sub protrusion 311 is deformed in the radial direction of the protrusion 31 as the force on the sub protrusion 311 increases, allowing the nut 10 to float relative to the limiting bracket 20. For example, in an embodiment where the protrusion 31 is disposed on the limiting bracket 20 and the positioning hole 32 is disposed in the nut 10, one end of the sub protrusion 311 is connected to the limiting bracket 20, and the other end of the sub protrusion 311 is a free end.

It should be noted that in an embodiment where the protrusion 31 is in elastic fit with the positioning hole 32, the positioning hole 32 may be a blind hole or a through hole.

FIG. 5 is a schematic diagram showing a clearance fit between a protrusion 31 and a positioning hole 32 according to some embodiments of this application. According to some embodiments of this application, optionally, as shown in FIG. 5, the protrusion 31 is in clearance fit with the positioning hole 32, and the protrusion 31 runs through the positioning hole 32. An end portion of the protrusion 31 is provided with an elastic stopper 33. The elastic stopper 33 is configured to prevent the protrusion 31 from falling off the positioning hole 32 along an axial direction of the positioning hole 32.

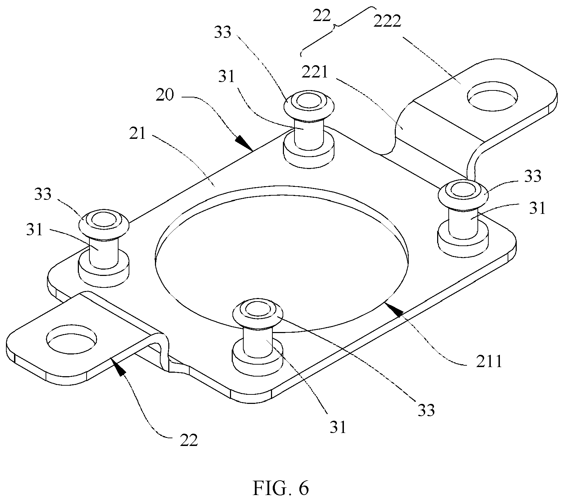

The protrusion 31 runs through the positioning hole 32. The positioning hole 32 is a through hole that penetrates through the limiting bracket 20 or the nut 10. For example, FIG. 6 is a schematic structural diagram (bottom view) of a limiting bracket 20 according to some other embodiments of this application. In an embodiment where the protrusion 31 is disposed on the limiting bracket 20 and the positioning hole 32 is disposed on the nut 10, as shown in FIG. 5 and FIG. 6, the positioning hole 32 penetrates through the nut 10 along the axial direction of the threaded hole 11, one end of the protrusion 31 is connected to the limiting bracket 20, the elastic stopper 33 is located at one end of the protrusion 31 farther away from the limiting bracket 20, the elastic stopper 33 is located outside the positioning hole 32, and the elastic stopper 33 and the limiting bracket 20 are respectively located on two sides of the positioning hole 32. For another example, in a not claimed embodiment where the protrusion 31 is disposed on the nut 10 and the positioning hole 32 is disposed on the limiting bracket 20, the positioning hole 32 penetrates through the limiting bracket 20 along the axial direction of the threaded hole 11, one end of the protrusion 31 is connected to the nut 10, the elastic stopper 33 is located at one end of the protrusion 31 farther away from the nut 10, the elastic stopper 33 is located outside the positioning hole 32, and the elastic stopper 33 and the limiting bracket 20 are respectively located on two sides of the positioning hole 32.

A size of the elastic stopper 33 is larger than a diameter of the positioning hole 32, so that the protrusion 31 is prevented from falling off the positioning hole 32 along the axial direction of the positioning hole 32.

The protrusion 31 is in clearance fit with the positioning hole 32 to meet a requirement for floating of the nut 10. The end portion of the protrusion 31 is provided with the elastic stopper 33, so that after the protrusion 31 fits with the positioning hole 32, the elastic stopper 33 can prevent the protrusion 31 from falling off the positioning hole 32 along the axial direction of the positioning hole 32. This ensures that the limiting bracket 20 is combined with the nut 10 during movement of the floating nut assembly 100, thereby avoiding loss of components.

According to some embodiments of this application, optionally, as shown in FIG. 5 and FIG. 6, the elastic stopper 33 fits around the protrusion 31, and an outer peripheral surface of the elastic stopper 33 includes a first guide slope 331 and a second guide slope 332. The first guide slope 331 is disposed opposite the second guide slope 332 along the axial direction of the positioning hole 32.

The elastic stopper 33 fits around the outer peripheral surface of the protrusion 31. The elastic stopper 33 and the protrusion 31 may be disposed as separate parts, and the elastic stopper 33 may be connected to the outer peripheral surface of the protrusion 31. Alternatively, the elastic stopper 33 may be integrally formed on the outer peripheral surface of the protrusion 31.

The outer peripheral surface of the elastic stopper 33 is a surface of the elastic stopper 33 around the axis of the protrusion 31. The elastic stopper 33 includes the first guide slope 331 and the second guide slope 332. The first guide slope 331 is disposed opposite the second guide slope 332 along the axial direction of the positioning hole 32. An included angle is formed between the first guide slope 331 and the second guide slope 332, and the included angle points at a direction leaving the axis of the protrusion 31.

In an embodiment where the protrusion 31 is disposed on the limiting bracket 20, the first guide slope 331 is far away from the limiting bracket 20 relative to the second guide slope 332. Guiding functions of the first guide slope 331 and the second guide slope 332 are specifically as follows: During insertion of the protrusion 31 into the positioning hole 32, when the first guide slope 331 comes into contact with an end portion of the positioning hole 32, the first guide slope 331 first comes into contact with the hole wall of the positioning hole 32. As the protrusion 31 moves toward the positioning hole 32 along the axial direction of the positioning hole 32, the elastic stopper 33 is elastically deformed, and a contact area between the first guide slope 331 and the hole wall of the positioning hole 32 gradually increases until the elastic stopper 33 is completely inserted into the positioning hole 32. The protrusion 31 continues to move along the axial direction of the positioning hole 32, and the elastic stopper 33 gradually leaves the positioning hole 32 until the elastic stopper 33 is completely outside the positioning hole 32, so that the protrusion 31 is inserted into the positioning hole 32. While the protrusion 31 is falling off the positioning hole 32, the second guide slope 332 first comes into contact with the hole wall of the positioning hole 32. As the protrusion 31 moves along the axial direction of the positioning hole 32, the elastic stopper 33 is elastically deformed, and a contact area between the second guide slope 332 and the hole wall of the positioning hole 32 gradually increases until the elastic stopper 33 is completely inserted into the positioning hole 32. The protrusion 31 continues to move along the axial direction of the positioning hole 32. The elastic stopper 33 moves to an end of the positioning hole 32 closer to the limiting bracket 20 and gradually leaves the positioning hole 32. When the elastic stopper 33 completely leaves the positioning hole 32, the protrusion 31 falls off the positioning hole 32.

The guiding functions of the first guide slope 331 and the second guide slope 332 can help the elastic stopper 33 enter the positioning hole 32 from two ends along the axial direction of the positioning hole 32, improving assembly and maintenance efficiency. In addition, the guiding functions of the first guide slope 331 and the second guide slope 332 reduce resistance against the elastic stopper 33 entering the positioning hole 32, which can prolong service life of the elastic stopper 33 and prevent the elastic stopper 33 from being damaged due to excessive resistance against the elastic stopper 33 entering the positioning hole 32.

According to some embodiments of this application, optionally, the end portion of the protrusion 31 and/or the end portion of the positioning hole 32 is provided with a guide portion for guiding the protrusion 31 to insert into the positioning hole 32.

As the end portion of the protrusion 31 and/or the end portion of the positioning hole 32 is provided with a guide portion, it means that the end portion of the protrusion 31 may be provided with a guide portion, or that the end portion of the positioning hole 32 may be provided with a guide portion, or that the end portion of the protrusion 31 and the end portion of the positioning hole 32 may be each provided with a guide portion. The guide portion may be a chamfer that is able to guide the protrusion 31 to insert into the positioning hole 32, reducing difficulty of the protrusion 31 entering the positioning hole 32.

The guide function of the guide portion facilitates insertion of the protrusion 31 into the positioning hole 32, thereby facilitating assembly of the limiting bracket 20 and the nut 10.

According to the present invention, as shown in FIG. 4 and FIG. 6, the limiting bracket 20 includes a bracket body 21 and a connecting arm 22. The bracket body 21 is configured to form a limiting space with the base 500 (as shown in FIG. 2 and FIG. 3), and the connecting arm 22 is detachably connected to the base 500.

The bracket body 21 and the base 500 form the limiting space. The bracket body 21 and the base 500 are spaced apart along the axial direction of the threaded hole 11, and the limiting space is formed between the bracket body 21 and the base 500. The connecting arm 22 is connected to the limiting bracket 20. For example, the connecting arm 22 may be integrally formed with the limiting bracket 20. Alternatively, the connecting arm 22 and the limiting bracket 20 may be disposed as separate parts, and the connecting arm 22 is fastened to the limiting bracket 20. For example, the connecting arm 22 is connected to the limiting bracket 20 by welding, riveting, bonding, or the like.

Optionally, the bracket body 21 may be a flat plate with a simple structure.

The bracket body 21 and the base 500 form a limiting space to restrict the nut 10 in the limiting space. The structure is simple. The connecting arm 22 is detachably connected to the base 500 to facilitate assembly and replacement of the nut 10.

According to some embodiments of this application, optionally, one end of the connecting arm 22 is connected to the bracket body 21, and a projection of the connecting arm 22 does not overlap a projection of the bracket body 21 in the plane perpendicular to the axial direction of the threaded hole 11.

The projection of the connecting arm 22 does not overlap the projection of the bracket body 21. To be specific, one end of the connecting arm 22 is connected to an end portion of the bracket body 21.

In the plane perpendicular to the axial direction of the threaded hole 11, projections of the connecting arms 22 do not overlap the projection of the bracket body 21, so that the nut 10 is separated from the limiting bracket 20 along the axial direction of the threaded hole 11, facilitating replacement of the nut 10.

According to some embodiments of this application, optionally, as shown in FIG. 4 and FIG. 6, the connecting arm 22 includes a first segment 221 and a second segment 222. The first segment 221 is connected to an edge of the bracket body 21. The second segment 222 extends from the first segment 221 along the radial direction of the threaded hole 11 toward a direction leaving the axis of the threaded hole 11. An included angle is present between the first segment 221 and the second segment 222. The second segment 222 is configured to be detachably connected to the base 500.

The first segment 221 connects the second segment 222 and the bracket body 21 as a connecting bridge. The second segment 222 may be parallel to the limiting bracket 20 to facilitate connection to the base 500. The second segment 222 and the base 500 may be connected in various manners, such as clamping and plugging, or may be threadedly connected by using a threaded part (such as a bolt or a threaded rod).

The included angle between the first section 221 and the second section 222 may be a right angle or an obtuse angle. For example, as shown in the figure, the first segment 221 and the second segment 222 form an L-shaped structure.

Optionally, as shown in FIG. 2, FIG. 4, and FIG. 6, the second segment 222 is provided with a threaded connecting hole, and the second segment 222 is connected to the base 500 by using a screw 40.

The second segment 222 extends from the first segment 221 along the radial direction of the threaded hole 11 toward the direction leaving the axis of the threaded hole 11, so that the projection of the connecting arm 22 does not overlap the projection of the bracket body 21, and the connecting arm 22 does not occupy a space between the bracket body 21 and the nut 10, ensuring a compact structure of the floating nut assembly 100.

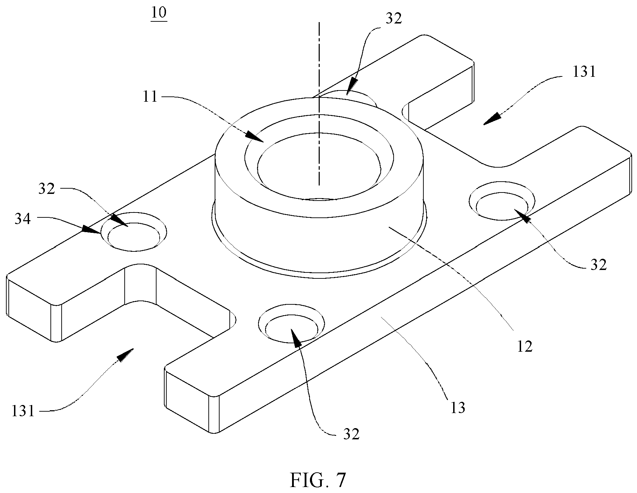

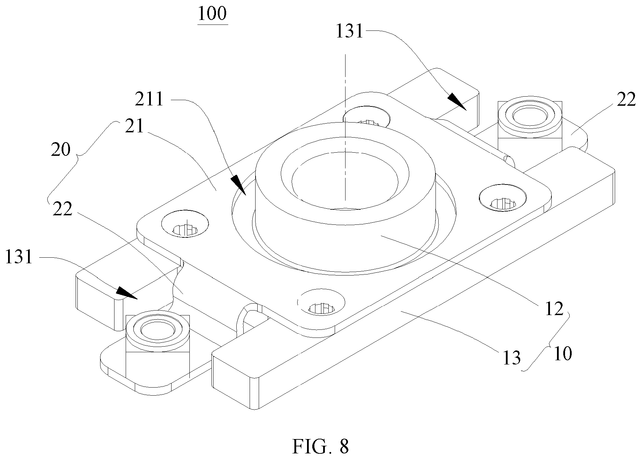

FIG. 7 is a schematic structural diagram of a nut according to some embodiments of this application. FIG. 8 is a schematic diagram showing fitting between a limiting bracket and a nut according to some embodiments of this application. According to the present invention, as shown in FIG. 7 and FIG. 8, the nut 10 includes a nut body 12 and a flange 13. The threaded hole 11 is disposed in the nut body 12, and the flange 13 is formed on an outer peripheral surface of the nut body 12. The bracket body 21 is provided with a through hole 211 corresponding to the nut body 12. The bracket body 21 fits around the nut body 12 through the through hole 211, and the flange 13 is restricted in the limiting space. Still referring to FIG. 1, the protrusion 31 is disposed on the bracket body 21, and the positioning hole 32 is disposed on the flange 13.

An axial direction of the through hole 211 is consistent with the axial direction of the nut 10.

The flange 13 is formed on the outer peripheral surface of the nut body 12, and may be disposed around the axis of the threaded hole 11. That the flange 13 is restricted in the limiting space means that a size of the flange 13 is greater than a size of the through hole 211. Along the axial direction of the threaded hole 11, the flange 13 cannot leave the limiting space from the through hole 211, and the flange 13 is restricted by the bracket body 21 and the base 500. In other words, in the plane perpendicular to the axial direction of the threaded hole 11, a projection of the flange 13 is larger than a projection of the through hole 211, and the projection of the flange 13 covers the projection of the through hole 211.

In some not claimed embodiments, the protrusion 31 may alternatively be disposed on the flange 13, and the positioning hole 32 may alternatively be disposed on the bracket body 21.

The flange 13 is restricted in the limiting space, and the flange 13 can move in the limiting space along the axial direction of the nut 10. Because the bracket body 21 fits around the nut body 12 through the through hole 211, when the flange 13 moves in the limiting space along the axial direction of the nut 10, the nut body 12 moves in the through hole 211 along the axial direction of the nut 10. The bracket body 21 and the base 500 prevent the flange 13 from leaving the limiting space along the axial direction of the nut 10. In combination with fitting between the protrusion 31 and the positioning hole 32, a requirement for assembling the nut 10 and the limiting bracket 20 is met.

According to some embodiments of this application, optionally, there are at least two connecting arms 22, and the at least two connecting arms 22 are spaced around an axis of the through hole 211.

The at least two connecting arms 22 are symmetrically disposed around the axis of the through hole 211. To be specific, all the connecting arms 22 are spaced apart around the axis of the through hole 211, and all the connecting arms 22 are distributed around the axis of the through hole 211. For example, as shown in FIG. 4 and FIG. 6, there are two connecting arms 22, and the two connecting arms 22 are symmetrically disposed around the axis of the through hole 211.

The at least two connecting arms 22 are spaced apart around the axis of the through hole 211, so that the limiting bracket 20 and the base 500 are connected through at least two connection positions, ensuring connection stability of the limiting bracket 20 and the base 500.

According to some embodiments of this application, optionally, as shown in FIG. 7 and FIG. 8, a clearance portion 131 for avoiding the connecting arm 22 is formed on the flange 13.

The clearance portion 131 may be a notch formed in the flange 13. To be specific, the clearance portion 131 is a hollowed-out zone on the flange 13 for accommodating the connecting arm 22.

The clearance portion 131 avoids the connecting arm 22, reduces an overall size of the floating nut assembly 100 and installation space occupied, and can also prevent the nut 10 from rotating relative to the limiting bracket 20.

According to some embodiments of this application, optionally, the clearance portion 131 may be a U-shaped structure. The clearance portion 131 may be located at an edge of the flange 13 to reduce the size of the flange 13 and space occupied by the flange 13, making an overall structure of the floating nut assembly 100 compact.

According to some embodiments of this application, optionally, the nut body 12 is in clearance fit with the through hole 211.

The nut body 12 is in clearance fit with the through hole 211. The outer peripheral surface of the nut body 12 is not in contact with the hole wall of the through hole 211, providing space for the nut 10 to move relative to the limiting bracket 20.

The nut body 12 is in clearance fit with the through hole 211, so that a clearance is present between the outer peripheral surface of the nut body 12 and the hole wall of the through hole 211, and the nut body 12 can move relative to the bracket body 21, allowing the nut 10 to move relative to the bracket body 21 in the plane perpendicular to the axial direction of the threaded hole 11.

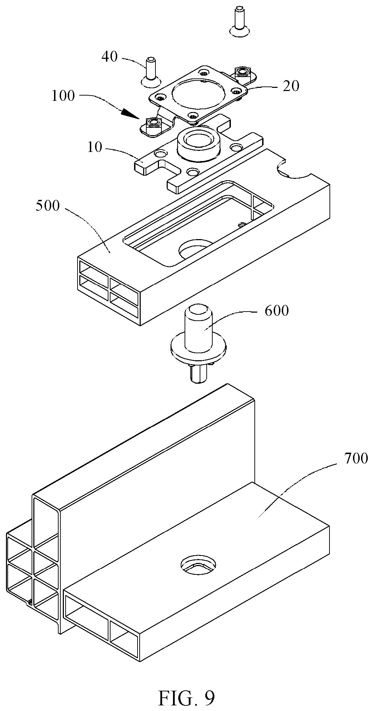

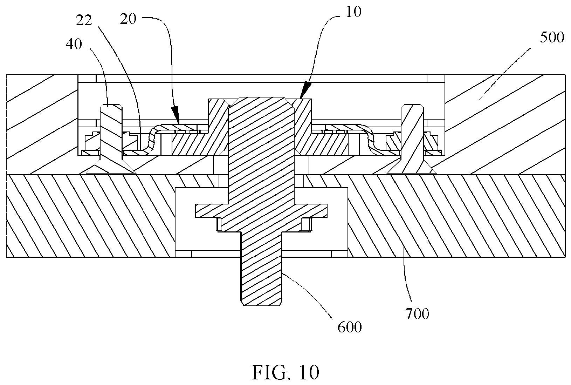

FIG. 9 is an exploded view of some components of an electric device according to some embodiments of this application. FIG. 10 is a partial cross-sectional view of an electric device according to some embodiments of this application. According to some embodiments of this application, the embodiments of this application further provide an electric device. As shown in FIG. 9 and FIG. 10, the electric device includes a device body, a battery, and the floating nut assembly 100 and the bolt 600 according to the foregoing embodiments. A limiting bracket 20 is detachably connected to the device body, and the bolt 600 is configured to be connected to a nut 10, so as to fasten the battery to the device body.

It should be noted that the device body is a base 500 connected to the limiting bracket 20. A limiting space is formed between the limiting bracket 20 and the device body, and the nut 10 is disposed in the limiting space.

The electric device may be a vehicle. The device body includes a beam of a vehicle body. A connecting arm 22 of the limiting bracket 20 is detachably connected to the beam of the vehicle body. As shown in FIG. 10, the battery is mounted on a battery holder 700, and the bolt 600 runs through the battery holder 700 and is connected to the nut 10 installed on the beam of the vehicle body.

In the electric device according to this embodiment of this application, the limiting bracket 20 is detachably connected to the device body to restrict the nut 10 in the limiting space formed between the limiting bracket 20 and the device body, and the bolt 600 is connected to the nut 10 to fasten the battery to the device body, facilitating assembly and disassembly of the battery and the device body.

According to some embodiments of this application, as shown in FIG. 1, this application provides a floating nut assembly 100, including a nut 10 and a limiting bracket 20.

The limiting bracket 20 includes the bracket body 21 and the connecting arm 22. The connecting arm 22 is connected to an edge of the bracket body 21. The connecting arm 22 is detachably connected to the base 500. A limiting space for accommodating the nut 10 is formed between the bracket body 21 and the base 500. The bracket body 21 is provided with the through hole 211. The bracket body 21 is provided with four protrusions 31. The four protrusions 31 are spaced apart around the axis of the through hole 211. There are two connecting arms 22, and the two connecting arms 22 are symmetrically disposed around the axis of the through hole 211.

The nut 10 includes the nut body 12 and the flange 13. The nut body 12 is provided with the threaded hole 11. The flange 13 is formed on the outer peripheral surface of the nut body 12. The flange 13 is provided with four positioning holes 32. The four positioning holes 32 are spaced apart around the axis of the nut 10. The axial direction of the threaded hole 11 is the axial direction of the nut 10.

As shown in FIG. 2 and FIG. 3, the nut 10 is accommodated in the limiting space, the flange 13 is located between the bracket body 21 and the base 500, and the bracket body 21 fits around the nut body 12 through the through hole 211. The axis of the through hole 211 is collinear with the axis of the nut 10. The protrusions 31 are in one-to-one correspondence to the positioning holes 32. The protrusion 31 is inserted into the positioning hole 32. The protrusion 31 is in elastic fit with the positioning hole 32, and the protrusion 31 is configured to be elastically deformable in the radial direction thereof. The nut 10 can move relative to the limiting bracket 20 in the plane perpendicular to the axial direction of the threaded hole 11.

The limiting space formed between the limiting bracket 20 and the base 500 is used to accommodate the nut 10, so as to restrict the nut 10 in the limiting space. The protrusion 31 is in elastic fit with the positioning hole 32, allowing the nut 10 to float relative to the limiting bracket 20. When the nut 10 moves relative to the limiting bracket 20 in the plane perpendicular to the axial direction of the threaded hole 11, the fitting between the protrusion 31 and the positioning hole 32 allows for a small floating space for the nut 10, so that movement of the nut 10 is small during assembly of the nut 10 and the bolt 600, thereby ensuring assembly efficiency and connection accuracy of the nut 10 and the bolt 600. In addition, four protrusions 31 correspond to the four positioning holes 32, which can prevent the nut 10 from rotating relative to the limiting bracket 20, further ensuring assembly efficiency and connection accuracy of the nut 10 and the bolt 600.

## Claims

1. A floating nut assembly (100), comprising:
a nut (10), provided with a threaded hole (11); and
a limiting bracket (20), configured to be detachably connected to a base (500) to form between the limiting bracket (20) and the base (500) a limiting space for accommodating the nut (10);
wherein one of the limiting bracket (20) and the nut (10) is provided with at least two protrusions (31), and the other one is provided with at least two positioning holes (32); the protrusions (31) are in one-to-one correspondence to the positioning holes (32); the protrusion (31) is inserted into the positioning hole (32); and the protrusion (31) is in clearance fit and/or elastic fit with the positioning hole (32);
wherein the limiting bracket (20) comprises a bracket body (21) and a connecting arm (22), wherein the bracket body (21) is configured to form the limiting space with the base (500), and the connecting arm (22) is configured to be detachably connected to the base (500); and
wherein the nut (10) comprises a nut body (12) and a flange (13), wherein the threaded hole (11) is disposed in the nut body (12); the flange (13) is formed on an outer peripheral surface of the nut body (12); the bracket body (21) is provided with a through hole (211) corresponding to the nut body (12); the bracket body (21) fits around the nut body (12) through the through hole (211); the flange (13) configured to be restricted in the limiting space; the protrusion (31) is disposed on the bracket body (21); and the positioning hole (32) is disposed on the flange (13).

2. The floating nut assembly (100) according to claim 1, wherein the protrusion (31) is in elastic fit with the positioning hole (32), and the protrusion (31) is configured to be elastically deformable in a radial direction thereof.

3. The floating nut assembly (100) according to claim 1, wherein the at least two protrusions (31) are spaced apart around an axis of the nut (10).

4. The floating nut assembly (100) according to claim 1, wherein a portion of the protrusion (31) in contact with the positioning hole (32) is made of an elastic material.

5. The floating nut assembly (100) according to claim 1, wherein the protrusion (31) is in clearance fit with the positioning hole (32); the protrusion (31) runs through the positioning hole (32); and an end portion of the protrusion (31) is provided with an elastic stopper (33), wherein the elastic stopper (33) is configured to prevent the protrusion (31) from falling off the positioning hole (32) along an axial direction of the positioning hole (32).

6. The floating nut assembly (100) according to claim 5, wherein the elastic stopper (33) fits around the protrusion (31), and an outer peripheral surface of the elastic stopper (33) comprises a first guide slope (331) and a second guide slope (332), wherein the first guide slope (331) is disposed opposite the second guide slope (332) along the axial direction of the positioning hole (32).

7. The floating nut assembly (100) according to any one of claims 1 to 6, wherein an end portion of the protrusion (31) and/or an end portion of the positioning hole (32) is provided with a guide portion for guiding the protrusion (31) to insert into the positioning hole (32).

8. The floating nut assembly (100) according to any preceding claim, wherein one end of the connecting arm (22) is connected to the bracket body (21), and a projection of the connecting arm (22) does not overlap a projection of the bracket body (21) in a plane perpendicular to an axial direction of the threaded hole (11).

9. The floating nut assembly (100) according to any preceding claim, wherein the connecting arm (22) is provided in a quantity of at least two, and the at least two connecting arms (22) are spaced apart around an axis of the through hole (211).

10. The floating nut assembly (100) according to any preceding claim, wherein a clearance portion (131) for avoiding the connecting arm (22) is formed on the flange (13).

11. The floating nut assembly (100) according to any preceding claim, wherein the nut body (12) is in clearance fit with the through hole (211).

12. An electric device, comprising:
a device body;
a battery;
the floating nut assembly (100) according to any one of claims 1 to 11, wherein the limiting bracket (20) is detachably connected to the device body; and
a bolt (600), configured to be connected to the nut (10) for fastening the battery to the device body.

## Patentansprüche

1. Anordnung (100) mit schwimmend gelagerter Mutter, umfassend:
eine Mutter (10), die mit einem Gewindeloch (11) versehen ist; und
einen Begrenzungshalter (20), der dazu konfiguriert ist, trennbar mit einer Basis (500) verbunden zu werden, um zwischen dem Begrenzungshalter (20) und der Basis (500) einen Begrenzungsraum zum Aufnehmen der Mutter (10) zu bilden;
wobei eines von dem Begrenzungshalter (20) und der Mutter (10) mit mindestens zwei Vorsprüngen (31) versehen ist und das andere mit mindestens zwei Positionierungslöchern (32) versehen ist; sich die Vorsprünge (31) in Eins-zu-Eins-Entsprechung mit den Positionierungslöchern (32) befinden; der Vorsprung (31) in das Positionierungsloch (32) eingesteckt ist; und sich der Vorsprung (31) mit dem Positionierungsloch (32) in Spielpassung und/oder elastischer Passung befindet;
wobei der Begrenzungshalter (20) einen Halterkörper (21) und einen Verbindungsarm (22) umfasst, wobei der Halterkörper (21) dazu konfiguriert ist, mit der Basis (500) den Begrenzungsraum zu bilden, und der Verbindungsarm (22) dazu konfiguriert ist, trennbar mit der Basis (500) verbunden zu werden; und
wobei die Mutter (10) einen Mutterkörper (12) und einen Flansch (13) umfasst, wobei das Gewindeloch (11) in dem Mutterkörper (12) angeordnet ist; der Flansch (13) auf einer äußeren Umfangsoberfläche des Mutterkörpers (12) gebildet ist; der Halterkörper (21) mit einem dem Mutterkörper (12) entsprechenden Durchgangsloch (211) versehen ist; der Halterkörper (21) durch das Durchgangsloch (211) um den Mutterkörper (12) passt; der Flansch (13) dazu konfiguriert ist, in dem Begrenzungsraum eingeengt zu sein; der Vorsprung (31) an dem Halterkörper (21) angeordnet ist; und das Positionierungsloch (32) an dem Flansch (13) angeordnet ist.

2. Anordnung (100) mit schwimmend gelagerter Mutter nach Anspruch 1, wobei sich der Vorsprung (31) mit dem Positionierungsloch (32) in elastischer Passung befindet und der Vorsprung (31) dazu konfiguriert ist, in einer radialen Richtung desselben elastisch verformbar zu sein.

3. Anordnung (100) mit schwimmend gelagerter Mutter nach Anspruch 1, wobei die mindestens zwei Vorsprünge (31) um eine Achse der Mutter (10) beabstandet sind.

4. Anordnung (100) mit schwimmend gelagerter Mutter nach Anspruch 1, wobei ein Abschnitt des Vorsprungs (31) in Kontakt mit dem Positionierungsloch (32) aus einem elastischen Material hergestellt ist.

5. Anordnung (100) mit schwimmend gelagerter Mutter nach Anspruch 1, wobei sich der Vorsprung (31) mit dem Positionierungsloch (32) in Spielpassung befindet; der Vorsprung (31) durch das Positionierungsloch (32) läuft; und ein Endabschnitt des Vorsprungs (31) mit einem elastischen Stopper (33) versehen ist, wobei der elastische Stopper (33) dazu konfiguriert ist, den Vorsprung (31) daran zu hindern, entlang einer Axialrichtung des Positionierungslochs (32) von dem Positionierungsloch (32) herunterzufallen.

6. Anordnung (100) mit schwimmend gelagerter Mutter nach Anspruch 5, wobei der elastische Stopper (33) um den Vorsprung (31) passt und eine äußere Umfangsoberfläche des elastischen Stoppers (33) eine erste Führungsschräge (331) und eine zweite Führungsschräge (332) umfasst, wobei die erste Führungsschräge (331) entlang der Axialrichtung des Positionierungslochs (32) gegenüber von der zweiten Führungsschräge (332) angeordnet ist.

7. Anordnung (100) mit schwimmend gelagerter Mutter nach einem der Ansprüche 1 bis 6, wobei ein Endabschnitt des Vorsprungs (31) und/oder ein Endabschnitt des Positionierungslochs (32) mit einem Führungsabschnitt zum Führen des Vorsprungs (31) zum Einstecken in das Positionierungsloch (32) versehen sind.

8. Anordnung (100) mit schwimmend gelagerter Mutter nach einem der vorangehenden Ansprüche, wobei ein Ende des Verbindungsarms (22) mit dem Halterkörper (21) verbunden ist und eine Projektion des Verbindungsarms (22) eine Projektion des Halterkörpers (21) in einer zu einer Axialrichtung des Gewindelochs (11) senkrechten Ebene nicht überlappt.

9. Anordnung (100) mit schwimmend gelagerter Mutter nach einem der vorangehenden Ansprüche, wobei der Verbindungsarm (22) in einer Menge von mindestens zwei bereitgestellt ist und die mindestens zwei Verbindungsarme (22) um eine Achse des Durchgangslochs (211) voneinander beabstandet sind.

10. Anordnung (100) mit schwimmend gelagerter Mutter nach einem der vorangehenden Ansprüche, wobei an dem Flansch (13) ein Spielabschnitt (131), um dem Verbindungsarm (22) auszuweichen, gebildet ist.

11. Anordnung (100) mit schwimmend gelagerter Mutter nach einem der vorangehenden Ansprüche, wobei sich der Mutterkörper (12) mit dem Durchgangsloch (211) in Spielpassung befindet.

12. Elektrische Vorrichtung, umfassend:
einen Vorrichtungskörper;
eine Batterie;
die Anordnung (100) mit schwimmend gelagerter Mutter nach einem der Ansprüche 1 bis 11, wobei der Begrenzungshalter (20) trennbar mit dem Vorrichtungskörper verbunden ist; und
eine Schraube (600), die dazu konfiguriert ist, mit der Mutter (10) verbunden zu werden, zum Befestigen der Batterie an dem Vorrichtungskörper.

## Revendications

1. Ensemble d'écrou flottant (100), comprenant :
un écrou (10), pourvu d'un trou fileté (11) ; et
un support de limitation (20), configuré pour être connecté de manière détachable à une base (500) pour former entre le support de limitation (20) et la base (500) un espace de limitation destiné à recevoir l'écrou (10) ;
dans lequel l'un du support de limitation (20) et de l'écrou (10) est pourvu d'au moins deux saillies (31), et l'autre est pourvu d'au moins deux trous de positionnement (32) ; les saillies (31) sont en correspondance de un à un avec les trous de positionnement (32) ; la saillie (31) est insérée jusque dans le trou de positionnement (32) ; et la saillie (31) est dans un ajustement avec jeu et/ou un ajustement élastique avec le trou de positionnement (32) ;
dans lequel le support de limitation (20) comprend un corps de support (21) et un bras de connexion (22), dans lequel le corps de support (21) est configuré pour former l'espace de limitation avec la base (500), et le bras de connexion (22) est configuré pour être connecté de manière détachable à la base (500) ; et
dans lequel l'écrou (10) comprend un corps d'écrou (12) et une bride (13), dans lequel le trou fileté (11) est disposé dans le corps d'écrou (12) ; la bride (13) est formée sur une surface périphérique externe du corps d'écrou (12) ; le corps de support (21) est pourvu d'un trou traversant (211) correspondant au corps d'écrou (12) ; le corps de support (21) s'ajuste autour du corps d'écrou (12) à travers le trou traversant (211) ; la bride (13) configurée pour être restreinte dans l'espace de limitation ; la saillie (31) est disposée sur le corps de support (21) ; et le trou de positionnement (32) est disposé sur la bride (13).

2. Ensemble d'écrou flottant (100) selon la revendication 1, dans lequel la saillie (31) est dans un ajustement élastique avec le trou de positionnement (32), et la saillie (31) est configurée pour être déformable élastiquement dans une direction radiale de celle-ci.

3. Ensemble d'écrou flottant (100) selon la revendication 1, dans lequel les au moins deux saillies (31) sont espacées autour d'un axe de l'écrou (10).

4. Ensemble d'écrou flottant (100) selon la revendication 1, dans lequel une partie de la saillie (31) en contact avec le trou de positionnement (32) est faite d'un matériau élastique.

5. Ensemble d'écrou flottant (100) selon la revendication 1, dans lequel la saillie (31) est dans un ajustement avec jeu avec le trou de positionnement (32) ; la saillie (31) traverse le trou de positionnement (32) ; et une partie d'extrémité de la saillie (31) est pourvue d'un bouchon élastique (33), dans lequel le bouchon élastique (33) est configuré pour empêcher la saillie (31) de tomber du trou de positionnement (32) le long d'une direction axiale du trou de positionnement (32).

6. Ensemble d'écrou flottant (100) selon la revendication 5, dans lequel le bouchon élastique (33) s'adapte autour de la saillie (31), et une surface périphérique externe du bouchon élastique (33) comprend une première pente de guidage (331) et une deuxième pente de guidage (332), dans lequel la première pente de guidage (331) est disposée à l'opposé de la deuxième pente de guidage (332) le long de la direction axiale du trou de positionnement (32).

7. Ensemble d'écrou flottant (100) selon l'une quelconque des revendications 1 à 6, dans lequel une partie d'extrémité de la saillie (31) et/ou une partie d'extrémité du trou de positionnement (32) sont pourvues d'une partie de guidage destinée à guider la saillie (31) à insérer jusque dans le trou de positionnement (32).

8. Ensemble d'écrou flottant (100) selon l'une quelconque des revendications précédentes, dans lequel une extrémité du bras de connexion (22) est connectée au corps de support (21), et une saillie du bras de connexion (22) ne chevauche pas une saillie du corps de support (21) dans un plan perpendiculaire à une direction axiale du trou fileté (11).

9. Ensemble d'écrou flottant (100) selon l'une quelconque des revendications précédentes, dans lequel le bras de connexion (22) est fourni en une quantité d'au moins deux, et les au moins deux bras de connexion (22) sont espacés l'un de l'autre autour d'un axe du trou traversant (211).

10. Ensemble d'écrou flottant (100) selon l'une quelconque des revendications précédentes, dans lequel une partie de dégagement (131) destinée à éviter le bras de connexion (22) est formée sur la bride (13).

11. Ensemble d'écrou flottant (100) selon l'une quelconque des revendications précédentes, dans lequel le corps d'écrou (12) est dans un ajustement avec jeu avec le trou traversant (211).

12. Dispositif électrique, comprenant :
un corps de dispositif ;
une batterie ;
l'ensemble d'écrou flottant (100) selon l'une quelconque des revendications 1 à 11, dans lequel le support de limitation (20) est connecté de manière amovible au corps de dispositif ; et
un boulon (600), configuré pour être connecté à l'écrou (10) destiné à fixer la batterie au corps de dispositif.
